Europäisches Patentamt

European Patent Office

Office européen des brevets

(11) Veröffentlichungsnummer: **0 244 807**
**A1**

## (12) EUROPÄISCHE PATENTANMELDUNG

(21) Anmeldenummer: 87106452.3

(22) Anmeldetag: 05.05.87

(51) Int. Cl.⁴: **G08C 19/16 , H04J 7/00**

(30) Priorität: **07.05.86 DE 3615452**

(43) Veröffentlichungstag der Anmeldung:
**11.11.87 Patentblatt 87/46**

(84) Benannte Vertragsstaaten:
**CH DE FR GB IT LI NL**

(71) Anmelder: **Endress u. Hauser GmbH u.Co.**
**Hauptstrasse 1**
**D-7867 Maulburg(DE)**

(72) Erfinder: **Borst, Walter**
**Waldstrasse 53,**
**D-7853 Steinen(DE)**

(74) Vertreter: **Leiser, Gottfried, Dipl.-Ing. et al**
**Patentanwälte Prinz, Leiser, Bunke & Partner**
**Manzingerweg 7**
**D-8000 München 60(DE)**

(54) **Anordnung zur Signalübertragung in einer Messanordnung.**

(57) Die Anordnung dient zur Signalübertragung in einer Meßanordnung, die einen Meßumformer (10) und ein entfernt davon angeordnetes Auswertegerät (20) enthält. Der Meßumformer ist mit dem Auswertegerät durch eine Zweidrahtleitung (15) verbunden, über die einerseits Meßwertsignale vom Meßumformer zum Auswertegerät und andererseits der für den Betrieb des Meßumformers erforderliche Versorgungsgleichstrom vom Auswertegerät zum Meßumformer übertragen werden. Zur Bildung der Meßwertsignale setzt der Meßumformer den zu übertragenden Meßwert in pulsmodulierte Meßwert-Stromimpulse konstanter Amplitude um, die dem Vorsorgungsgleichstrom auf der Zweidrahtleitung überlagert werden. Zur Verbindung mit der Zweidrahtleitung weist das Auswertegerät eine Auswerte-Schnittstelle (23) auf, die einen auf die Meßwert-Stromimpulse ansprechenden Signalempfänger enthält. Zusätzlich ist wenigstens eine Kommunikationseinheit (30) vorgesehen, die bei Bedarf parallel zum Meßumformer an die Zweidrahtleitung angeschlossen werden kann. Zur Verbindung mit der Zweidrahtleitung enthält die Kommunikationseinheit eine zum Senden und Empfangen von Kommunikationssignalen ausgebildete Kommunikations-Schnittstelle (33). Die Kommunikations-Schnittstelle enthält einen Signalgeber, der pulsmodulierte Kommunikations-Stromimpulse erzeugt, deren Impulsamplitude von der Impulsamplitude der Meßwert-Stromimpulse verschieden ist und dem Versorgungsgleichstrom auf der Zweidrahtleitung als Kommunikationssignale überlagert werden. Der Signalempfänger der Auswerte-Schnittstelle enthält einen Amplituden-Diskriminator zur Unterscheidung der Meßwert-Stromimpulse und der Kommunikations-Stromimpulse aufgrund ihrer unterschiedlichen Impulsamplituden. Der Signalgeber der Auswerte-Schnittstelle schaltet die Versorgungsgleichspannung auf der Zweidrahtleitung entsprechend der Pulsmodulation des zu sendenden Kommunikationssignals zwischen zwei Spannungswerten um, und der Signalempfänger der Kommunikations-Schnittstelle spricht auf die pulsmodulierten Spannungsänderungen an. Dadurch können die Kommunikationseinheit und das Auswertegerät über die Zweidrahtleitung Informationen austauschen, ohne daß die Übertragung der Meßwertsignale über die gleiche Zweidrahtleitung beeinträchtigt wird.

# FIG . 1

Meßumformer — 10

23 — Auswertegerät

Meßwandler

11

12

13 — Meßumformer - Schnittstelle

$I_{00}$   35

$S_M$

15

$I_{00} + I_{01}$

$S_M$   $S_A$   $S_K$

21

22 — Mikro-computer

Auswerte-Schnittstelle

20

36

15

34   $\uparrow S_K$

$I_{01} \downarrow$   $\downarrow S_A$   34

Kommunikations - Schnittstelle   — 33

30 —   8.8.8.8.8.8   — 32

— 31

1a

## Anordnung zur Signalübertragung in einer Meßanordnung

Die Erfindung betrifft eine Anordnung zur Signalübertragung in einer Meßanordnung mit einem Meßumformer, der mit einem entfernt davon angeordneten Auswertegerät durch eine Zweidrahtleitung verbunden ist, über die der für den Betrieb des Meßumformers erforderliche Versorgungsgleichstrom vom Auswertegerät zum Meßumformer übertragen wird, wobei der Meßumformer den zu übertragenden Meßwert in pulsmodulierte Meßwert-Stromimpulse konstanter Amplitude umsetzt, die dem Versorgungsgleichstrom auf der Zweidrahtleitung als Meßwertsignal überlagert werden, und wobei das Auswertegerät zur Verbindung mitder Zweidrahtleitung eine Auswerte-Schnittstelle aufweist, die einen auf die Meßwert-Stromimpulse ansprechenden Signalempfänger enthält, sowie mit wenigstens einer Kommukationseinheit, die über eine zum Senden und Empfangen von Kommunikationssignalen ausgebildete Kommunikations-Schnittstelle parallel zum Meßumformer an die Zweidrahtleitung anschließbar ist.

Meßanordnungen, bei welchen der Meßumformer und das Auswertegerät räumlich voneinander getrennt und nur durch eine Zweidrahtleitung miteinander verbunden sind, werden sehr weitgehend verwendet. Durch die Kommunikationseinheit, die zusätzlich an die Zweidrahtleitung anschließbar ist und Kommunikationssignale über die Zweidrahtleitung senden und empfangen kann, ist es insbesondere möglich, am Ort des Meßumformers oder auch von einer anderen Stelle aus Abgleich-, Einstell-, Überprüfungs-oder Wartungsarbeiten unter Ausnutzung des Auswertegeräts durchzuführen. Die Kommunikationseinheit ist beispielsweise ein taschenrechnerähnliches Gerät mit einer Tastatur und mit einer numerischen oder alphanumerischen Anzeige. Durch Betätigung der Tastatur kann die Bedienungsperson die benötigten Informationen vom Auswertegerät abrufen, und die als Antwort auf die Abfrage vom Auswertegerät übermittelten Informationen werden auf der Anzeige der Kommunikationseinheit sichtbar gemacht. Die für diesen Informationsaustausch übertragenen Kommunikationssignale sind Impulsfolgen, die über die Zweidrahtleitung gehen und entsprechend den zu übertragenden Informationen moduliert sind. Dadurch ergeben sich insbesondere Probleme, wenn auch das über die Zweidrahtleitung gehende Meßwertsignal durch Impulsfolgen dargestellt ist, Es besteht dann die Gefahr, daß sich das Meßwertsignal und das Kommunikationssignal gegenseitig beeinträchtigen und stören. Zur Vermeidung solcher Beeinträchtigungen und Störungen kann es erforderlich sein, die Übertragung von Meßwertsignalen während der Verwendung der Kommunikationseinheit zu unterbrechen.

Aufgabe der Erfindung ist die Schaffung einer Anordnung, die es ermöglicht, in einer Meßanordnung der angegebenen Art über die gleiche Zweidrahtleitung gleichzeitig impulsförmige Meßwertsignale und impulsförmige Kommunikationssignale zu übertragen, ohne daß sich diese Signale gegenseitig beeinträchtigen oder stören.

Nach der Erfindung wird diese Aufgabe dadurch gelöst, daß die Kommunikations-Schnittstelle einen Signalgeber enthält, der pulsmodulierte Kommunikations-Stromimpulse erzeugt, deren Impulsamplitude von der Impulsamplitude der Meßwert-Stromimpulse verschieden ist und die dem Versorgungsgleichstrom auf der Zweidrahtleitung als Kommunikationssignale überlagert werden, und daß der Signalempfänger der Auswerte-Schnittstelle einen Amplituden-Diskriminator zur Unterscheidung der Meßwert-Stromimpulse und der Kommunikations-Stromimpulse aufgrund ihrer unterschiedlichen Impulsamplituden enthält.

Bei der nach der Erfindung ausgebildeten Signalübertragungsanordnung ist eine eindeutige Unterscheidung der auf der gleichen Zweidrahtleitung übertragenen Kommunikations-Stromimpulse und Meßwert-Stromimpulse aufgrund der unterschiedlichen Impulsamplituden selbst dann möglich, wenn die Impulsfolgen gleichzeitig vorhanden sind und sich die Impulse gegenseitig überlagern. Für diese Unterscheidung genügt empfangsseitig, also im Auswertegerät, ein Amplituden-Diskriminator von verhältnismäßig einfachen Aufbau, so daß der Schaltungsaufwand gering ist.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispiels anhand der Zeichnung. In der Zeichnung zeigt:

Fig. 1 das Prinzipschema einer Meßanordnung, bei der die Erfindung anwendbar ist,

Fig. 2 das Schaltbild des Meßumsetzers mit der Meßumformer-Schnittstelle in näheren Einzelheiten,

Fig. 3 das Schaltbild der Kommunikations-Schnittstelle,

Fig.4 das Schaltbild der Auswerte-Schnittstelle und

Fig. 5 Diagramme des zeitlichen Verlaufs von Signalen.

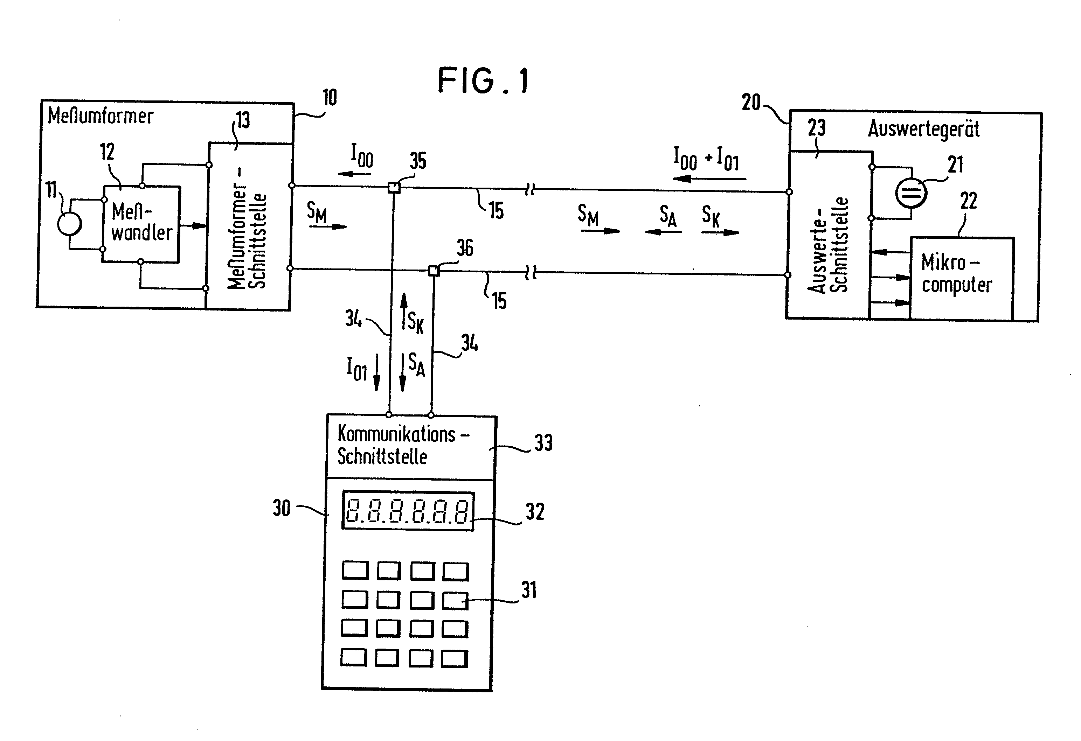

Fig. 1 zeigt eine Meßanordnung mit einem Meßumformer 10, der durch eine Zweidrahtleitung 15 mit einem entfernt davon angeordneten Auswertegerät 20 verbunden ist. Der Meßumformer 10 enhält einen Sensor 11 zur Erfassung einer zu messenden physikalischen Meßgröße (z.B. Temperatur, Druck, Feuchtigkeit, Füllstand) und einen mit dem Sensor 11 verbundenen elektronischen Meßwandler 12, der ein den Augenblickswert der Meßgröße darstellendes elektrisches Signal abgibt. Der Meßumformer 10 enthält keine eingene Energiequelle, sondern bezieht die für seinen Betrieb erforderliche Gleichstromenergie über die Zweidrahtleitung 15 von einer im Auswertegerät 20 enthaltenen Spannungsquelle 21. Über die gleiche Zweidrahtleitung wird ein den Augenblickswert der Meßgröße darstellendes Meßwertsignal SM vom Meßumformer 10 zum Auswertegerät 20 übertragen. Der Meßumformer 10 ist mit der Zweidrahtleitung 15 über eine Meßumformer-Schnittstelle 13 verbunden, die einerseits die Energieversorgung des Meßumformers 10 aus der Zweidrahtleitung 15 sicherstellt und andererseits das Ausgangssignal des Meßwandlers 12 in ein zur Übertra gung über die Zweidrahtleitung 15 geeignetes Meßwertsignal $S_M$ umsetzt. Einer üblichen Technik folgend ist das Meßwertsignal $S_M$ ein impulsförmig getasteter Gleichstrom, so daß der Meßwert durch eine Pulsmodulation mit konstanter Impulsamplitude ausgedrückt ist, insbesondere eine Pulsfrequenzmodulation (PFM) oder eine Pulscodemodulation (PCM). Der impulsförmig getastete Gleichstrom ·wird ebenfalls der Spannungsquelle 21 entnommen und überlagert sich dem über die Zweidrahtleitung 15 fließenden Versorgungsgleichstrom $I_{oo}$, der der Energieversorgung des Meßumformers 10 dient.

Das Auswertegerät 20 enthält für die Verarbeitung und Auswertung des Meßwertsignals einen Mikrocomputer 22. Zur Verbindung des Auswertegeräts 20 mit der Zweidrahtleitung 15 dient eine Auswerte-Schnittstelle 23, die einerseits die Übertragung der vom Meßumformer 10 benötigten Gleichstromenergie von der Spannungsquelle 21 zur Zweidrahtleitung 15 bewirkt und andererseits ein für die Weiterverarbeitung im Mikrocomputer 22 geeignetes digitales Signal aus dem impulsförmig getasteten Gleichstrom des Meßsignals $S_M$ gewinnt, der in dem über die Zweidrahtleitung 15 fließenden Gesamtstrom enthalten ist.

Der bisher beschriebene Teil der Meßanordnung von Fig. 1 entspricht der üblichen Ausbildung und Funktionsweise solcher Meßanordungen. Er ergibt wie diese den Vorteil, daß der Meßumformer, der oft sehr rauhen Umweltbedingungen ausgesetzt ist, verhältnismäßig einfach und robust aufgebaut sein kann und keine eigene Energiequelle benötigt, während das Auswertegerät beliebig weit vom Meßumformer entfernt angeordnet sein kann, wobei eine einfache Zweidrahtleitung für die Verbindung zwischen Meßumformer und Auswertegerät genügt.

In Fig. 1 ist weiterhin eine Kommunikationseinheit 30 dargestellt, die parallel zum Meßumformer an die Zweidrahtleitung 15 angeschlossen undso ausgebildet ist, daß sie mit dem Mikrocomputer 22 im Auswertegerät 20 einen Informationsaustausch durchführen kann, ohne daß der normale Betrieb der Meßanordnung dadurch beeinträchtigt wird. Die Kommunikationseinheit 30 ist ein taschenrechnerähnliches Gerät mit einer Tastatur 31 und einer Digitalanzeige 32 sowie mit der erforderlichen Elektronik für die Signalverarbeitung. Die Verbindung mit der Zweidrahtleitung 15 erfolgt über eine Kommunikations-Schnittstelle 33 und eine zweiadrige Anschlußleitung 34, die mittels Anschlußklemmen 35, 36 nach Bedarf an die Zweidrahtleitung 15 angeklemmt werden kann.

Die Kommunikationseinheit 30 macht es insbesondere möglich, am Ort des Meßumformers 10 unter Ausnutzung des entfernt angeordneten Auswertegeräts 20 Abgleich-, Einstell-oder Überprüfungsarbeiten vorzunehmen, so daß die Notwendigkeit entfällt, zur Durchführung solcher Arbeiten ein Auswertegerät am Ort des Meßumformers zu installieren. Informationen, die von der Kommunikationseinheit 30 durch Betätigung der Tastatur 31 zum Mikrocomputer 22 übertragen werden sollen, werden von einem in der Kommunikations-Schnittstelle 33 enthaltenen Signalgeber in ein für die Übertragung über die Zweidrahtleitung 15 geeignetes Kommunikationssignal $s_K$ umgesetzt. Die Auswerte-Schnittstelle 23 enthält einen Signalempfänger, der auf das über die Zweidrahtleitung 15 übertragene Kommunikationssignal $S_K$ anspricht und dieses in ein digitales Signal umwandelt, das dem Mikrocomputer 22 zugeführt wird. Informationen, die vom Mikrocomputer 22 zur Kommunikationseinheit 30 übertragen werden sollen, werden von einem in der Auswerte-Schnittstelle 23 enthaltenen Signalgeber in ein für die Übertragung über die Zweidrahtleitung 15 geeignetes Kommunikationssignal $S_A$umgesetzt, das von einem in der Kommunikations-Schnittstelle 33 enthaltenen Signalempfänger empfangen wird. Die Art der zwischen den Schnittstellen 23 und 33 ausgetauschten Kommunikationssignale $S_K$ und $S_A$ unterscheidet sich von der Art des über die Zweidrahtleitung 15 über tragenen Meßwertsignals $S_M$ derart, daß die Kommunikationssignale in den Schnittstellen 23 und 33 vom Meßwertsignal unterschieden werden können.

Die Kommunikationseinheit 30 kann mit einer eigenen Energiequelle ausgestattet sein, doch erfolgt vorzugsweise die Energieversorgung der Kommunikationseinheit 30 ebenfalls über die Zweidrahtleitung 15 von der Spannungsquelle 21 im Auswertegerät 20. Zusätzlich zu dem Versorgungsgleichstrom $I_{oo}$ des Meßumformers 10 wird der Spannungsquelle 21 noch der Versorgungsgleichstrom $I_{o1}$ für die Kommunikationseinheit 30 entnommen.

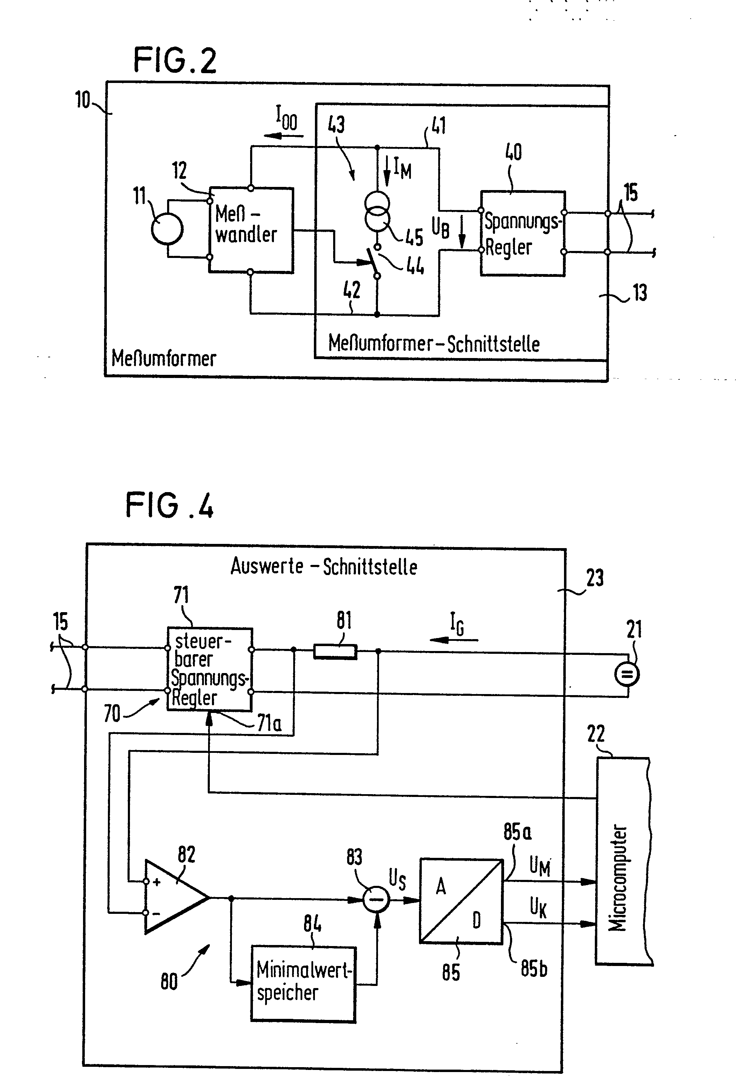

Die Figuren 2, 3 und 4 ziegen schematische Schaltbilder der Meßumformer-Schnittstelle 13, der Kommunikations-Schnittstelle 33 und der Auswerte-Schnittstelle 23 bei einer Ausführungsform, die die folgenden Besonderheiten aufweist:

-das vom Meßumformer 10 gelieferte Meßwertsignal $S_M$ ist ein pulsmodulierter Gleichstrom;

-das von der Kommunikationseinheit 30 gelieferte Kommunikationssignal $S_K$ ist ebenfalls ein pulsmodulierter Gleichstrom, der durch eine andere Impulsamplitude vom Meßwertsignal $S_M$ unterscheidbar ist;

-das vom Auswertegerät 20 gelieferte Kommunikationssignal $S_A$ ist eine pulsmodulierte Spannung, die der an die Zweidrahtleitung 15 angelegten Gleichspannung überlagert ist;

-die Energieversorgung der Kommunikationseinheit 30 erfolgt über die Zweidrahtleitung 15 von der Spannungsquelle 21 im Auswertegerät 20.

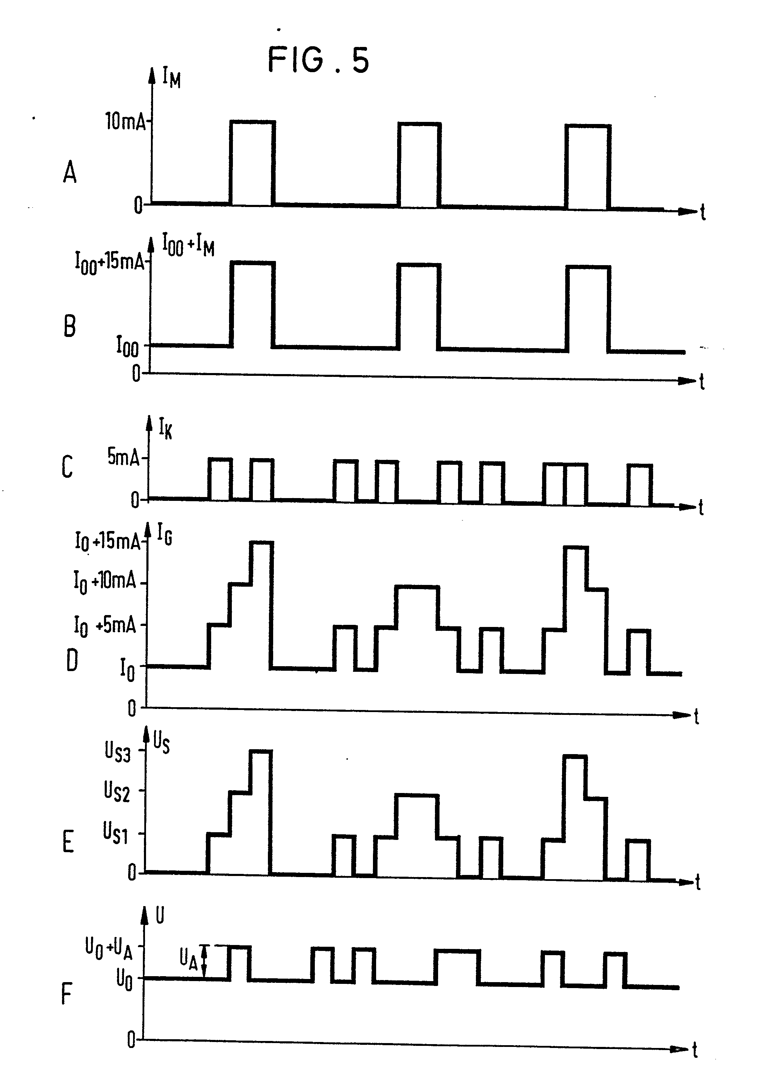

Fig. 2 zeigt den Meßumformer 10 mit dem Sensor 11 und dem Meßwandler 12 entsprechend der Darstellung von Fig. 1 sowie die Meßumformer-Schnittstelle 13 in näheren Einzelheiten. Die Zweidrahtleitung 15 ist mit den Eingangsklemmen eines Spannungsreglers 40 verbunden, der an seinen Ausgangsklemmen eine geregelte Gleichspannung $U_B$ abgibt, die unabhängig von Spannungsänderungen auf der Zweidrahtleitung 15 konstant bleibt. An die Ausgangsklemmen des Spannungsreglers 40 sind zwei Leiter 41, 42 angeschlossen, die der Spannungsversorgung des Meßwandlers 12 dienen und über die der Versorgungsgleichstrom $I_{oo}$ fließt. Ferner sind die Leiter 41 und 42 durch einen geschalteten Nebenschlußzweig 43 überbrückt, der durch einen Schalter 44 in Reihe mit einem Strombegrenzer 45 dargestellt ist. Wenn der Schalter 44 geschlossen ist, fließt über den Nebenschlußzweig 43 ein Gleichstrom, dessen Größe durch den Strombegrenzer 45 bestimmt ist, während bei geöffnetem Schalter 44 der Strom den Wert Null hat. Das Öffnen und Schließen des Schalters 44 wird durch das Ausgangssignal des Meßwandlers 12 gesteuert, das den Meßwert durch eine Pulsfrequenzmodulation (PFM) wiedergibt. Demzufolge fließt über den Nebenschlußzweig 43 der im Diagramm A von Fig. 5 dargestellte pulsmodulierte Gleichstrom $I_M$. Die Impulse haben eine durch den Strombegrenzer 45 bestimmte konstante Impulsamplitude von beispielsweise 10 mA und eine in Abhängigkeit vom Meßwert veränderliche Pulsfolgefrequenz. Anstelle einer Pulsfrequenzmodulation kann auch eine andere Pulsmodulation mit konstanter Impulsamplitude angewendet werden, also eine Pulsdauermodulation (PDM), eine Pulsphasenmodulations (PPM) oder vorzugsweise eine Pulscodemodulation (PCM).

Der pulsmodulierte Gleichstrom $I_M$ wird über den Spannungsregler 40 und die Zweidrahtleitung 15 aus der Spannungsquelle 21 im Auswertegerät 20 entnommen; der Nebenschlußzweig 43 hat also die Funktion eines zusätzlichen Verbrauchers, der impulsweise mit der Spannungsquelle verbunden wird. Auf der Zweidrahtleitung 15 ist der pulsmodulierte Gleichstrom $I_M$ als Meßstrom dem konstanten Versorgungsgleichstrom $I_{oo}$ überlagert, wie im Diagramm B von Fig. 5 dargestellt ist.

Der Strombegrenzer 45 kann im einfachsten Fall ein Widerstand sein. In diesem Fall muß der Schalter 44 vorhanden sein, doch ist er in Wirklichkeit nicht ein mechanischer Schaltkontakt, wie in Fig. 2 symbolisch dargestellt ist, sondern ein schneller elektronischer Schalter, beispielsweise ein Transistor oder ein Feldeffekttransistor. Vorzugsweise wird jedoch für den Strombegrenzer 45, wie in Fig. 2 durch das Schaltsymbol angedeutet ist, eine als "Konstantstromquelle" bekannte Halbleiterschaltung verwendet, die in einem weiten Bereich der angelegten Spannung einen nur von einem angelegten digitalen Steuersignal abhängigen konstanten Strom fließen läßt. Das Ausgangssignal des Meßwandlers 12 kann dann zur Pulsmodulation des Stroms direkt an die Steuerelektrode der Konstantstromquelle angelegt werden, so daß der Schalter 44 entfällt; er ist in Fig. 2 nur zur Verdeutlichung der Funktionsweisei dargestellt.

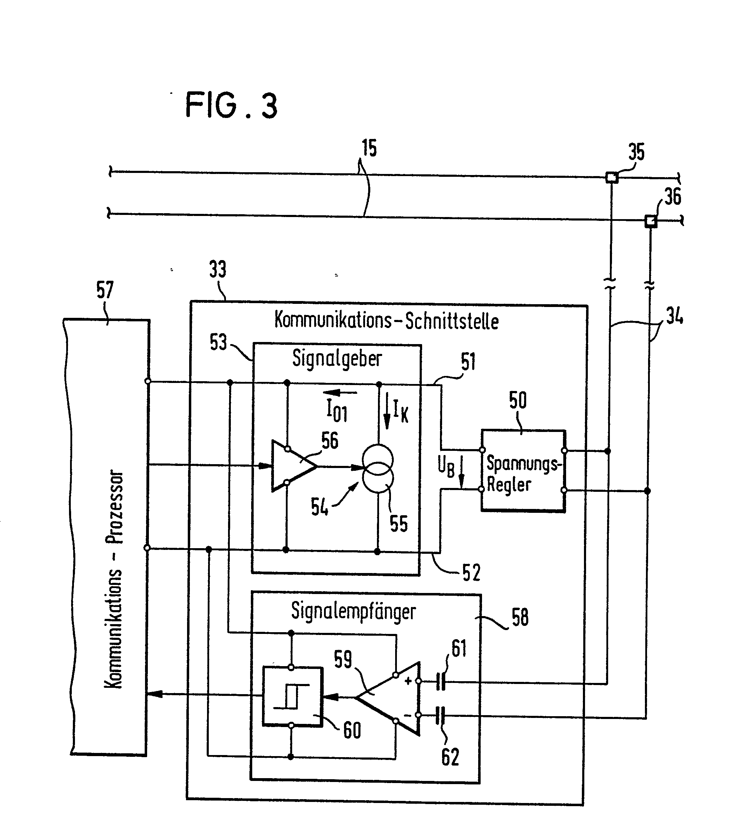

Die in Fig. 3 dargestellte Kommunikations-Schnittstelle 33 enthält einen Spannungsregler 50, dessen Eingangsklemmen über die Anschlußleitung 34 mit der Zweidrahtleitung 15 verbunden sind, wenn die Kommunikationseinheit 30 an die Zweidrahtleitung 15 angeschlossen ist. Der Spannungsregler 50 gibt an seinen Ausgangsklemmen eine geregelte Gleichspannung $U_B$ ab, die unabhängig von Spannungsänderungen auf der Zweidrahtleitung 15 konstant ist. An die Ausgangsklemmen des Spannungsreglers 50 sind zwei Leiter 51, 52 angeschlossen, die der Spannungsversorgung der Elektronik der Kommunikationseinheit 30 dienen und über die der Versorgungsgleichstrom $I_{o1}$ fließt, der über den Spannungsregler 50, die Anschlußleitung 34 und die Zweidrahtleitung 15 aus der Spannungsquelle 21 im Auswertegerät 20 entnommen wird.

4

Die Kommunikations-Schnittstelle 33 enthält ferner einen Signalgeber 53 mit einem zwischen den Leitern 51 und 52 angeschlossenen geschalteten Nebenschlußzweig 54, der so ausgebildet sein kann, wie zuvor für den Nebenschlußzweig 43 in der Meßumsetzer-Schnittstelle 13 erläutert wurde. Gemäß der Darstellung von Fig. 3 enthält der Nebenschlußzweig 54 eine steuerbare Konstantstromquelle 55, die durch ein über einen Verstärker 56 an ihre Steuerelektrode angelegtes Steuersignal geöffnet und gesperrt werden kann. Das Steuersignal wird von einem zur Elektronik der Kommunikationseinheit 30 gehörenden Kommunikations-Prozessor 57 geliefert und ist entsprechend der zu übertragenden Information pulscodemoduliert. Somit fließt über den Nebenschlußzweig 54 ein pulscodemodulierter Gleichstrom $I_K$, wie er im Diagramm C von Fig. 5 dargestellt ist. Die Impulse haben eine konstante Impulsamplitude, die aber von der Impulsamplitude des Meßstroms $I_M$ verschieden ist. Als Beispiel ist in Fig. 5 angenommen, daß die Impulsamplitude des Stroms $I_K$ halb so groß ist wie die Impulsamplitude des Meßstroms $I_M$, so daß sie bei dem angegebenen Zahlenbeispiel 5 mA beträgt. Der pulsmodulierte Strom $I_K$ stellt das von der Kommunikationseinheit 30 zum Mikroprozessor 22 des Auswertegeräts 20 zu übertragende Kommunikationssignal $S_K$ dar. Er wird ebenfalls aus der Gleichspannungsquelle 21 entnommen und überlagert sich auf der Zweidraht-leitung 15 den Versorgungsgleichströmen $I_{00}$ und $I_{01}$ sowie dem Meßstrom $I_M$. Somit fließt auf der Zweidrahtleitung 15 zwischen dem Auswertegerät 20 und der Anschlußstelle der Kommunikationseinheit 30 der im Diagramm D von Fig. 5 dargestellte Gesamtstrom $I_G$, wenn der Kommunikationsstrom $I_K$ des Diagramms C und der Meßstrom $I_M$ des Diagramms A gleichzeitig vorhanden sind.

Bezeichnet man den gesamten konstanten Versorgungsgleichstrom mit $I_0$:

$$I_0 = I_{00} + I_{01},$$

so zeigt das Diagramm D von Fig. 5, daß der Gesamtstrom $I_G$ auf der Zweidrahtleitung 15 vier verschiedene Werte annehmen kann, je nachdem, ob die Impulse des Meßstroms $I_M$ und des Kommunikationsstroms $I_K$ den Signalwert 0 oder den Signalwert 1 haben:

| $I_M$ | $I_K$ | $I_G$ |
|---|---|---|
| 0 | 0 | $I_0$ |
| 0 | 1 | $I_0$ + 5 mA |
| 1 | 0 | $I_0$ + 10 mA |
| 1 | 1 | $I_0$ + 15 mA |

Somit lassen sich die pulsmodulierten Ströme $I_M$ und $I_K$ aus dem Gesamtstrom $I_G$ eindeutig identifizieren.

Die Kommunikations-Schnittstelle 23 enthält gemäß dem Schaltbild von Fig. 3 ferner einen Signalempfänger 58, der auf Spannungsänderungen auf der Zweidrahtleitung 15 anspricht. Der Signalempfänger 58 enthält einen Differenzverstärker 59, dem ein Schmitt-Trigger 60 nachgeschaltet ist. Die Spannungsversorgung der Schaltungen 59 und 60 erfolgt ebenfalls von den Leitern 51 und 52. Die auf der Zweidrahtleitung 15 herrschende Spannung wird über Kondensatoren 61 und 62 an die Differenzeingänge des Differenzverstärkers 59 angelegt, so daß dieser nur die Wechselspannungsanteile verstärkt. Durch den Schmitt-Trigger 60 wird das Ausgangssignal des Verstärkers 59 zu einem Digitalsignal mit zwei Signalwerten umgeformt, das einem Eingang des Kommunikations-Prozessors 57 zugeführt wird.

Die in Fig. 4 dargestellte Auswerte-Schnittstelle 23 enthält einen Signalgeber 70 und einen Signalempfänger 80. Wesentlicher Bestandteil des Signalgebers 70 ist ein steuerbarer Spannungsregler 71, an dessen Eingangsklemmen die ungeregelte Gleichspannung der Spannungsquelle 21 angelegt ist und an dessen Ausgangsklemmen die Zweidrahtleitung 15 angeschlossen ist. Der Spannungsregler 71 gibt am Ausgang eine geregelte Gleichspannung ab, die durch ein an einen Steuereingang 71a angelegtes Steuersignal zwischen zwei Spannungswerten umschaltbar ist. Das Steuersignal wird von einem Ausgang des Mikrocomputers 22 an den Steuereingang 71a angelegt und ist gemäß den vom Mikrocomputer 22 zur Kommunikationseinheit 30 zu übertragenden Informationen pulscodemoduliert. Demzufolge wird die an die Zweidrahtleitung 15 angelegte Gleichspannung entsprechend der Pulscodemodulation zwischen zwei Wer-ten $U_0$ und $U_0 + U_A$ umgeschaltet, wie im Diagramm F von Fig. 5 dargestellt ist. Der der Grundspannung $U_0$ überlagerte pulsmodulierte Spannungsanteil $U_A$ stellt das vom Mikrocomputer 22 zur Kommunikationseinheit 30 zu übertragende Kommunikationssignal $S_A$ dar und wird vom Signalempfänger 58 in der Kommunikations-Schnittstelle 30 aus der Gesamtspannung entnommen. Die Spannungsregler 40 und 50 in der Meßumformer-Schnittstelle 13 bzw. in der Kommunikations-Schnittstelle 33 verhindern, daß sich die impulsförmigen Spannungsänderungen auf die Funktionen der Elektronik im Meßumformer 10 und in der Kommunikationseinheit 30 auswirken.

Zum Signalempfänger 80 in der Auswerte-Schnittstelle 23 gehört ein Widerstand 81, der in Serie in die Leitung zwischen der Spannungsquelle 21 und dem Spannungsregler 71 eingefügt ist. Der über die Zweidrahtleitung 15 fließende Gesamtstrom $I_G$, der im Diagramm D von Fig. 5 dargestellt ist, fließt auch über den Widerstand 81 und ruft an diesem einen Spannungsabfall hervor, der dem Gesamtstrom $I_G$ proportional ist. Die am Widerstand 81 abgegriffene Spannung wird nach Verstärkung in einem Differenzverstärker 82 einerseits dem ersten Eingang einer Subtrahierschaltung 83 und andererseits einem Minimalwertspeicher 84 zugeführt. Der Minimalwertspeicher 84 hält den Spannungswert fest, der dem kleinsten Wert des Gesamtstroms $I_G$ entspricht. Gemäß dem Diagramm D von Fig. 5 ist dies der Summenstrom der Versorgungsgleichströme: $I_o = I_{oo} + I_{o1}$. Der gespeicherte Minimalwert wird dem zweiten Eingang der Subtrahierschaltung 83 zugeführt und in dieser von der dem ersten Eingang zugeführten Gesamtspannung abgezogen, so daß am Ausgang der Subtrahierschaltung 83 die im Diagramm E von Fig. 5 dargestellte Spannung $U_S$ abgegeben wird, die der Summe des pulsmodulierten Meßstroms $I_M$ und des pulsmodulierten Kommunikationsstroms $I_K$ proportional ist. Die Spannung $U_S$ nimmt außer dem Wert 0 drei verschiedene Werte $U_{S1}$, $U_{S2}$, $U_{S3}$ an, die den Stromwerten 5, 10 bzw. 15 mA proportional sind.

Der Ausgang der Subtrahierschaltung 83 ist mit dem Eingang eines Analog-Digital-Umsetzers 85 verbunden, der an zwei Ausgängen 85a und 85b digitale Signale $U_M$ und $U_K$ abgibt, die nach der folgenden Tabelle vom Wert der Spannung $U_S$ abhängen:

| Wert der Spannung $U_S$ | Ausgang 85a $U_M$ | Ausgang 85b $U_K$ |
|---|---|---|
| 0 | 0 | 0 |
| $U_{S1}$ | 0 | 1 |
| $U_{S2}$ | 1 | 0 |
| $U_{S3}$ | 1 | 1 |

Der zeitliche Verlauf des digitalen Signals $U_M$ entspricht genau dem zeitlichen Verlauf des im Diagramm A von Fig. 5 dargestellten pulsmodulierten Meßstroms $I_M$, und der zeitliche Verlauf des Signals $U_K$ entspricht genau dem zeitlichen Verlauf des im Diagramm C dargestellten Kommunikationsstroms $I_K$. Die vom Analog-Digital-Umsetzer 85 abgegebenen digitalen Signale können unmittelbar den entsprechenden Eingängen des Mikrocomputers 22 zugeführt werden.

Die anhand der Figuren 2 bis 5 erläuterte Ausführungsform der Meßanordnung ergibt den Vorteil, daß alle Informationssignale gleichzeitig auf der Zweidrahtleitung vorhanden sein können, ohne daß sie sich gegenseitig beeinträchtigen. Insbesondere wird die Übertragung des Meßwertsignals nicht unterbrochen oder gestört, wenn die Kommunikationseinheit angeschlossen ist und Kommunikationssignale mit dem Auswertegerät austauscht. Dies gilt insbesondere auch für den zuvor angenommenen Fall, daß das Meßwertsignal durch eine pulsmodulierte Impulsfolge gebildet ist.

Es ist auch möglich, mehrere Kommunikationseinheiten nach Art der Kommunikationseinheit 30 gleichzeitig an die Zweidrahtleitung anschließen, die dann abwechselnd mit dem Mikrocomputer 22 in Verbindung treten können. Damit in diesem Fall jede Kommunikationseinheit die für sie bestimmten Kommunikationssignale auswertet, wird die jeweils gewünschte Kommunikationseinheit durch eine Adresse aufgerufen. Zwei Kommunikationseinheiten können aber nicht direkt miteinander in Verbindung treten, weil ihre Signalempfänger nur auf die vom Auswertegerät kommenden Kommunikationssignale in Form von Spannungsimpulsen ansprechen, nicht dagegen auf die von den Signalgebern anderer Kommunikationseinheiten gelieferten Kommunikationssignale in Form von Stromimpulsen.

6

## Ansprüche

1. Anordnung zur Signalübertragung in einer Meßanordnung mit einem Meßumformer, der miteinem entfernt davon angeordneten Auswertegerät durch eine Zweidrahtleitung verbunden ist, über die der für den Betrieb des Meßumformers erforderliche Versorgungsgleichstrom vom Auswertegerät zum Meßumformer übertragen wird, wobei der Meßumformer den zu übertragenden Meßwert in pulsmodulierte Meßwert-Stromimpulse konstanter Amplitude umsetzt, die dem Versorgungsgleichstrom auf der Zweidrahtleitung als Meßwertsignal überlagert werden, und wobei das Auswertegerät zur Verbindung mit der Zweidrahtleitung eine Auswerte-Schnittstelle aufweist, die einen auf die Meßwert-Stromimpulse ansprechenden Signalempfänger enthält, sowie mit wenigstens einer Kommunikationseinheit, die über eine zum Senden und Empfangen von Kommunikationssignalen ausgebildete Kommunikations-Schnittstelle parallel zum Meßumformer an die Zweidrahtleitung anschließbar ist, dadurch gekennzeichnet, daß die Kommunikations-Schnittstelle (33) einen Signalgeber (53) enthält, der pulsmodulierte Kommunikations-Stromimpulse (I$_K$) erzeugt, deren Impulsamplitude von der Impulsamplitude der Meßwert-Stromimpulse (I$_M$) verschieden ist und die dem Versorgungsgleichstrom (I$_o$) auf der Zweidrahtleitung (15) als Kommunikationssignale (S$_K$) überlagert werden, und daß der Signalempfänger (80) der Auswerte-Schnittstelle (23) einen Amplituden-Diskriminator (85) zur Unterscheidung der Meßwert-Stromimpulse (I$_M$) und der Kommunikations-Stromimpulse (I$_K$) aufgrund ihrer unterschiedlichen Impulsamplituden enthält.

2. Anordnung nach Anspruch 1, dadurch gekennzeichnet, daß der Amplituden-Diskriminator des Signalempfängers (80) der Auswerte-Schnittstelle (23) durch einen Analog-Digital-Umsetzer (85) gebildet ist, der das der Summe der Meßwert-Stromimpulse (I$_M$) und der Kommunikations-Stromimpulse (I$_K$ entsprechende Gesamtsignal (U$_s$) in getrennte Digitalsignale (U$_M$, U$_K$) umsetzt.

3. Anordnung nach Anspruch 1 oder 2, dadurch gekennzeichnet, daß der Signalgeber (53) der Kommunikations-Schnittstelle (33) einen entsprechend der Pulsmodulation des zu sendenden Kommunikationssignals geschalteten Nebenschlußzweig (54) enthält.

4. Anordnung nach einem der Ansprüche 1 bis 3, dadurch gekennzeichnet, daß der Signalgeber (70) der Auswerte-Schnittstelle (23) die Versorgungsgleichspannung auf der Zweidrahtleitung (15) entsprechend der Pulsmodulation des zu sendenden Kommunikationssignals zwischen zwei Spannungswerten umschaltet, und daß der Signalempfänger (58) der Kommunikations-Schnittstelle (33) auf die pulsmodulierten Spannungsänderungen anspricht.

5. Anordnung nach Anspruch 4, dadurch gekennzeichnet, daß die Zweidrahtleitung (15) in der Auswerte-Schnittstelle (23) über einen steuerbaren Spannungsregler (71) mit einer Spannungsquelle (21) verbunden ist.

6. Anordnung nach einem der vorhergehenden Ansprüche, dadurch gekennzeichnet, daß der Meßumformer (10) einen die Auswirkungen von Spannungsänderungen auf der Zweidrahtleitung (15) unterdrückenden Spannungsregler (40) oder Energiespeicher enthält.

7. Anordnung nach einem der vorhergehenden Ansprüche, dadurch gekennzeichnet, daß die Kommunikationseinheit (30) ohne eigene Energieversorgung ausgebildet ist und die für ihren Betrieb erforderliche Gleichstromenergie über die Zweidrahtleitung (15) vom Auswertegerät (20) bezieht.

8. Anordnung nach Anspruch 7, dadurch gekennzeichnet, daß die Kommunikationseinheit (30) einen die Auswirkungen von Spannungsänderungen auf der Zweidrahtleitung (15) unterdrückenden Spannungsregler (50) oder Energiespeicher enthält.

# FIG.1

Meßumformer — 13 — 10

Meßwandler 12 — 11

Meßumformer - Schnittstelle

$I_{00}$ — 35

$S_M$

$I_{00} + I_{01}$

15 — $S_M$ — $S_A$ — $S_K$

20 — 23 — Auswertegerät

21

22 — Mikro-computer

Auswerte-Schnittstelle

34 — $S_K$

$I_{01}$ — $S_A$ — 34

36 — 15

Kommunikations - Schnittstelle — 33

30 — 8.8.8.8.8 — 32

31

0 244 807

E 1266

# FIG.2

# FIG .4

# FIG. 3

Kommunikations-Schnittstelle

Signalgeber

Signalempfänger

Kommunikations - Prozessor

Spannungs-Regler

# FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 101 528 (HONEYWELL) <br> * Das ganze Dokument * | 1,5-7 | G 08 C 19/16 <br> H 04 J 7/00 |
| Y | DE-A-2 330 263 (LICENTIA) <br> * Seite 5, Zeile 12 - Seite 6, Zeile 8; Figuren 1,2 * | 1 | |
| Y | FR-A-2 377 611 (ENDRESS & HAUSER) <br> * Seite 4, Zeile 25 - Seite 5, Zeile 4; Figur 1 * | 5 | |
| Y | CONTROL AND INSTRUMENTATION, Band 8, Nr. 8, September 1976, Seiten 28-29, London, GB; B. STEVENS: "Signal transmission put on a pedestal" <br> * Figur 1 * | 6 | |
| Y | PATENT ABSTRACTS OF JAPAN, Band 10, Nr. 113 (E-399)[2170], 26. April 1986; & JP-A-60 249 441 (YOKOKAWA HOKUSHIN DENKI K.K.) 10-12-1985 <br> * Das ganze Dokument * | 7 | RECHERCHIERTE SACHGEBIETE (Int. Cl.4) <br><br> G 08 C <br> H 04 J |

Der vorliegende Recherchenbericht wurde für alle Patentansprüche erstellt.

| Recherchenort | Abschlußdatum der Recherche | Prüfer |
|---|---|---|
| DEN HAAG | 04-08-1987 | WANZEELE R.J. |